(19) **Europäisches Patentamt / European Patent Office / Office européen des brevets**

(11) **EP 3 957 972 B1**

(12) **EUROPEAN PATENT SPECIFICATION**

(45) Date of publication and mention of the grant of the patent:
**26.03.2025 Bulletin 2025/13**

(21) Application number: **20763573.1**

(22) Date of filing: **21.04.2020**

(51) International Patent Classification (IPC):
***G01N 1/28*** *(2006.01)*

(52) Cooperative Patent Classification (CPC):
**G01N 1/286;** G01N 25/18; G01N 2001/2873

(86) International application number:
**PCT/CN2020/085828**

(87) International publication number:
**WO 2020/173508 (03.09.2020 Gazette 2020/36)**

(54) **CARBON FIBRE BUNDLE SAMPLE PREPARATION APPARATUS, AND PREPARATION METHOD FOR CARBON FIBRE BUNDLE**

VORRICHTUNG ZUR HERSTELLUNG VON KOHLENSTOFFFASERBÜNDELPROBEN UND VERFAHREN ZUR HERSTELLUNG VON KOHLENSTOFFFASERBÜNDELN

APPAREIL DE PRÉPARATION D'ÉCHANTILLON DE FAISCEAU DE FIBRES DE CARBONE, ET PROCÉDÉ DE PRÉPARATION DE FAISCEAU DE FIBRES DE CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2019 CN 201910144963**
**27.02.2019 CN 201920246444 U**

(43) Date of publication of application:
**23.02.2022 Bulletin 2022/08**

(73) Proprietor: **Beijing Center For Physical And Chemical Analysis**
**Haidian, Beijing 100089 (CN)**

(72) Inventors:
- **ZHANG, Yuxiang**
  **Beijing 100089 (CN)**
- **GAO, Xia**
  **Beijing 100089 (CN)**
- **LI, Qinmei**
  **Beijing 100089 (CN)**
- **LIU, Weili**
  **Beijing 100089 (CN)**
- **WANG, Yu**
  **Beijing 100089 (CN)**

(74) Representative: **Vidon Brevets & Stratégie**
**16B, rue de Jouanet**
**BP 90333**
**35703 Rennes Cedex 7 (FR)**

(56) References cited:
| | |
|---|---|
| CN-A- 101 530 964 | CN-A- 103 234 784 |
| CN-A- 104 913 969 | CN-A- 106 645 277 |
| CN-A- 109 900 534 | CN-U- 205 209 886 |
| CN-U- 208 283 179 | CN-U- 209 961 560 |
| JP-A- 2006 175 394 | JP-A- 2010 145 343 |
| US-A- 5 185 639 | |

## EP 3 957 972 B1

**Description**

**TECHNICAL FIELD**

The present invention relates to sample preparation device, in particular to a carbon fiber bundle sample preparation device.

**BACKGROUND**

A carbon fiber is hailed as one of the materials with the best overall properties in current industry. It is a novel carbon material, the chemical composition of which contains more than 90% of carbon elements in mass fraction. The carbon fiber and its modified composite materials have been widely used in many fields such as aerospace, machinery manufacturing, textile, chemical industry, civil engineering, and medical and health care. Both the carbon fiber itself and its composite materials are of great practical application value.

Thermal conductivity is one of the important physical parameters for evaluating the thermal properties of carbon fibers, and obtaining the axial thermal conductivity of carbon fibers through accurate measurement has important guiding significance for the development, preparation and evaluation of carbon fibers with different thermal properties and composite materials thereof.

There are many methods for testing the thermal conduction property of materials, and can be generally classified into two types: steady-state and transient methods. In the steady-state method, a thermal conductivity is directly measured according to Fourier equation; however, the temperature range and the thermal conductivity range are narrow, so that the steady-state method is mainly applicable to measuring materials with medium and low thermal conductivity at medium temperature. The transient method has a wide application range, and is particularly applicable to testing of materials with high thermal conductivity as well as testing at high temperatures. The fastest growing and most representative method, which is generally accepted by the international thermal physics community, is the Flash Method, also referred to as the laser method or laser flash method.

Conventional methods for measuring the axial thermal conduction property of carbon fibers mainly comprise electrical methods such as a direct current energising method, a T-shaped method, and a $3\omega$ method. However, a single carbon fiber is too small in radial size (generally a few micrometers), and is anisotropic, and it is difficult to directly and accurately measure the thermal conductivity of the single carbon fiber. He Fengmei et al. used the laser flash method to obtain the thermal diffusivity and thermal conductivity of the carbon fiber, which confirms the feasibility of the laser flash method to measure the thermal diffusivity of the carbon fiber.

The current national standard GB/T 22588-2008 "Determination of Thermal Diffusivity or Thermal Conductivity by the Flash Method" is equivalent to use of ASTM E1461-2001 "Standard Test Method for Thermal Diffusivity by the Flash Method". This test method is applicable to measurements performed on solid materials that are essentially completely dense, homogeneous and isotropic, the materials being opaque to applied energy pulses. However, in some cases, it also produces acceptable results when used on porous samples. Therefore, anisotropic carbon fibers with tiny radial dimensions require rigorous and appropriate experimental design to accommodate certain deviations from these strict guidelines to perform axial thermal conductivity test of the carbon fibers.

ASTM E1461-2013 "Standard Test Method for Thermal Diffusivity by the Flash Method" requires that a test sample is generally a circular sheet (i.e., a carbon fiber bundle sample), of which the front surface area is smaller than the area of an energy beam. Usually, the diameter of the test sample is 10 to 12.5 mm (in special cases, diameters as small as 6 mm and diameters as large as 30 mm have been reported to be used successfully). The optimum thickness depends on the value of an estimated thermal diffusivity, and should be selected so that the time to reach half of the maximum temperature is within the range of 10 to 1000 ms. A thinner sample is required at a higher temperature to minimise heat loss correction. However, the sample should commonly be thick enough to represent a test material. Generally, the thickness is within the range of 1 to 6mm.

Therefore, when the axial thermal conduction property (thermal diffusivity and thermal conductivity) of carbon fibers is tested by using the laser flash method, it is necessary that the carbon fibers are radially bundled (a plurality of axially parallel carbon fibers are arranged in a cylindrical shape), and then the carbon fiber bundle is cut out for a certain length in the axial direction to be prepared into a circular flaky sample, and the sample and its preparation are key points of using the flash method to measure the thermal diffusivity.

At present, carbon fiber bundle sample preparation is mainly based on manual sample preparation, that is, two people cooperate to wrap the carbon fiber into a cylindrical shape by using adhesive tapes, then cut out one section with a cutter, and use sandpaper to planish two end faces to make a circular sheet. The interior of the carbon fiber bundle after manual sample preparation does have sufficient smoothness and is fuzzing and twisting, and the compacting degree of the sample varies with the change of hand strength, which does have a certain rule, thereby affecting the accuracy of test results. There are also some literatures and reports in which a cylindrical clamp holder is used for carbon fiber bundle sample preparation, but there are also big problems, either it is difficult for the carbon fiber bundle to penetrate into the cylindrical clamp holder, or the outline dimension accuracy of the prepared sample hardly meets the standard required by GB/T 22588-2008 and ASTM E1461-2013, the internal smoothness is insufficient, and the filling rate of the carbon fibers cannot be precisely determined.

JP 2006 175 394 A describes a yarn bundle preparation method and a tension applying mechanism for a yarn bundle, in which two predetermined points in the longitudinal direction of the yarn bundle are separated and a constraint for reducing the diameter of the yarn bundle is applied.

**SUMMARY**

In view of this, the present invention provides a carbon fiber bundle sample preparation device, and using the device to prepare a carbon fiber bundle sample can greatly reduce interferences of the sample preparation process of a sample on experimental results, ensure the accuracy and repeatability of the experimental link, and facilitate the analysis of experimental data and experimental results later.

The carbon fiber bundle sample preparation device comprises a pre-pressing and straightening assembly, a restraint ring assembly and an edge cutting assembly;

the pre-pressing and straightening assembly is used to press and straighten carbon fibers forming a carbon fiber bundle, so as to obtain a cylindrical carbon fiber bundle;

the restraint ring assembly comprises an upper restraint ring and a lower restraint ring, the upper restraint ring and the lower restraint ring are two semicircular rings capable of being snap-fitted, and form a full circle after butt joint to serve as a restraint ring, and the cylindrical carbon fiber bundle is restrained in the restraint ring;

the edge cutting assembly comprises a clamping device for clamping the restraint ring restraining the carbon fiber bundle, and a cutter for cutting edges of the clamped carbon fiber bundle to obtain a carbon fiber bundle sample;

the pre-pressing and straightening assembly comprises a first support, a second support, two T-shaped pressing blocks, guide rails, positioning nuts, sleeves and coupling fasteners;

the first support and the second support are each provided with a U-shaped groove penetrating through the front and rear end faces thereof;

on the end face of the first left support opposite to the second support, the left and right ends of the U-shaped groove are each provided with a strip-shaped boss in the height direction of the U-shaped groove;

on the end face of the second support opposite to the first left support, the left and right ends of the U-shaped groove are each provided with a strip-shaped groove matched with the strip-shaped boss;

the strip-shaped boss and the strip-shaped groove are butt-joint positioning surfaces of the first support and the second support, and when the first support and the second support are butted, the strip-shaped bosses on the first support are located in the strip-shaped grooves on the second support to ensure that the planes and curved surfaces of the two U-shaped grooves are coplanar in the axis direction of the guide rail;

the bottoms of the first support and the second support, at the left and right ends of each U-shaped groove, are each provided with a through hole for mounting the guide rail, and the guide rails pass through the through holes at the bottoms of the first support and the second support to connect the first support and the second support in series; one end of each guide rail is fixed to the first support through the coupling fasteners, and after the other end of each guide rail passes through the second support, its protruding end is connected with the sleeve and the positioning nut in sequence; and

the bottom of the vertical part of each T-shaped pressing block is provided with a semicircular groove, the vertical parts of the two T-shaped pressing blocks are inserted into the U-shaped grooves on the first support and the second support respectively, and the semicircular groove at the bottom of the vertical part of each T-shaped pressing block is butted with the semicircular concave surface at the bottom of the corresponding U-shaped groove to form a circular hole for placement of the carbon fiber bundle; and the two T-shaped pressing blocks are fixedly connected with the supports corresponding thereto respectively by the coupling fasteners.

Further, the clamping device in the edge cutting assembly comprises a handle, a support pipe and a pressing ring; the handle is of a hollow pipe structure, and internal threads are formed on the inner circumference of one end of the handle; one end of the support pipe is provided with external threads matched with the internal threads of the handle, and the handle and the support pipe are coaxially connected through threaded connection; the other end of the support pipe is of a semicircular structure; the pressing ring is of a semicircular structure with the same radius as the semicircular structure at the end part of the support pipe; the semicircular structure at the end part of the support pipe and the pressing ring are butted and fixed to form a tubular structure to clamp the restraint ring restraining the carbon fiber bundle; and a shaft shoulder for axially limiting the carbon fiber bundle is disposed inside the support pipe.

A carbon fiber bundle sample preparation method based on the above sample preparation device is as follows:

step 1: calculating the mass M of carbon fibers to be tested required to reach a set volume filling rate;

step 2: pressing the carbon fiber bundle
carbon fibers to be tested, with the mass M, are weighed to form a carbon fiber bundle; the carbon fiber bundle is horizontally placed in the U-shaped grooves after the first support and the second support are in butt joint, the vertical parts of the two T-shaped pressing blocks are inserted into the U-shaped grooves of the first support and the second support respectively, and the two T-shaped pressing block are fixedly connected with the supports corresponding thereto respectively by the coupling fasteners to pre-press the carbon fiber bundle in the U-shaped grooves through the T-shaped pressing blocks;

step 3: straightening the carbon fiber bundle
the positioning nuts and the sleeves are taken down from the guide rails in sequence, and then the positioning nuts are screwed in onto the guide rails; the fasteners, for connecting the T-shaped pressing blocks, on the second support are unscrewed so that the second support can move along the guide rails, the movement stops when the second support makes contact with the positioning nuts, thereby completing straightening of the carbon fiber bundle, and the fasteners, for connecting the T-shaped pressing blocks, on the second support are screwed to press the carbon fiber bundle.

step 4: restraining the carbon fiber bundle
the upper restraint ring is positioned by the upper restraint ring positioning component to form an upper restraint ring component, and the lower restraint ring is positioned by the lower restraint ring positioning component to form a lower restraint ring component; the upper restraint ring component is put into a space between the first support and the second support from top to bottom, and the lower restraint ring component is put into the space from bottom to top, so that the upper restraint ring and the lower restraint ring are snap-fitted together to form a restraint ring to restrain the carbon fiber bundle in the restraint ring;

step 5: taking out the carbon fiber bundle restrained by the restraint ring
the T-shaped pressing blocks and the second support are removed, and positioning of the upper restraint ring by the upper restraint ring positioning component and positioning of the lower restraint ring by the lower restraint ring positioning component are released respectively to take out the restraint ring in which the carbon fiber bundle is restrained;

step 6: cutting edges of the carbon fiber bundle
the restraint ring is clamped by the clamping device in the edge cutting assembly, and the parts, extending out of the restraint ring, of two ends of the carbon fiber bundle, are subjected to edge cutting to form a carbon fiber bundle sample with the same thickness as the restraint ring.

In step 1, the method for calculating the mass M of the carbon fibers to be tested required to reach a set volume filling rate is as follows:

a bundle of carbon fibers to be tested with the length L and the mass m is selected, and the cross section area $S_c$ of a single carbon fiber to be tested is calculated from Formula (1) according to the specific gravity $\rho$ of the carbon fiber to be tested:

$$S_c = \frac{m}{\rho L} \qquad (1)$$

the inner hole section area $S_y$ of the restraint ring is calculated from Formula (2) according to the inner diameter D of the restraint ring:

$$S_y = \frac{\pi D^2}{4} \qquad (2)$$

setting a volume filling rate K, the cross section area S of the carbon fiber bundle sample with the volume filling rate K is obtained from Formula (3):

$$S = K S_y \qquad (3)$$

the scale coefficient of S and $S_c$ is derived from Formula (4):

$$\emptyset = \frac{S}{S_c} \qquad (4)$$

the mass M of the carbon fibers to be tested required to reach the volume filling rate K is: M-Øm

In step 4, the upper restraint ring positioning component for positioning the upper restraint ring comprises: an upper restraint ring bracket, a positioning piece B and a positioning piece D; one end of the upper restraint ring bracket is of a semicircular structure with the same radius as the upper restraint ring, the upper restraint ring is placed on an arc surface of the semicircular structure, the positioning piece B and the positioning piece D are mounted on end faces of two sides of the semicircular structure of the upper restraint ring bracket respectively through fastening connectors to clamp the upper restraint ring located therebetween; and
the structure of the lower restraint ring positioning component for positioning the lower restraint ring is the same as the structure of the upper restraint ring positioning component.

Beneficial effects:

The sample preparation device normalises the preparation process of a carbon fiber bundle sample. Through the pre-pressing and straightening assembly, the smoothness and straightness of the carbon fiber bundle can be more in line with experimental requirements. Through the restraint ring, the carbon fiber bundle sample can obtain precise volume density and outline dimension. Through the edge cutting assembly of the carbon fiber bundle sample preparation device, the non-uniformity of the surface of the sample (sand holes, scratching and stripes) can be avoided. The sample preparation device is used, which can tremendously reduce interferences of the sample preparation process of the sample on experimental results, ensure the accuracy and repeatability of the experimental link, facilitate the analysis of experimental data and experimental results later, and be conductive to application and popularisation of measuring the axial thermal diffusivity of carbon fibers by the flash method.

**BRIEF DESCRIPTION OF THE DRAWINGS**

FIG. 1 is a structural schematic diagram of a pre-pressing and straightening assembly of a carbon fiber bundle sample preparation device;
FIG. 2 is a left view of the pre-pressing and straightening assembly of the carbon fiber bundle sample preparation device;
FIG. 3 is an A-A section view of FIG. 2;
FIG. 4 is a B-B section view of FIG. 2;
FIG. 5 is a C-C section view of FIG. 2;
FIG. 6 is a D-D section view of FIG. 2;
FIG. 7 is a partially enlarged view of I in FIG. 3;
FIG. 8 is a structural schematic diagram of an upper restraint ring;
FIG. 9 is a structural schematic diagram of a lower restraint ring;

FIG. 10 is a schematic diagram of working positions of the upper and lower restraint rings;

FIG. 11 is a schematic diagram of an upper restraint ring positioning component;

FIG. 12 is a schematic diagram of a lower restraint ring positioning component;

FIG. 13 is a structural schematic diagram of a clamping device in an edge cutting assembly;

FIG. 14 is a schematic diagram showing straightening a carbon fiber bundle sample;

FIG. 15 is a structural schematic diagram of an upper restraint ring component equipped with the upper restraint ring;

FIG. 16 is a structural schematic diagram of a lower restraint ring component equipped with the lower restraint ring; and

FIG. 17 is a schematic diagram of the working principle of the carbon fiber bundle sample preparation device.

In which: 1- hexagonal head bolt; 2 - T-shaped pressing block; 3 - first support; 4 - screw A; 5 - positioning nut; 6 - guide rail; 7 - lower restraint ring bracket; 8 - positioning piece A; 9 - screw B; 10 - positioning piece B; 11 - upper restraint ring bracket; 12 - positioning piece C; 13 - positioning piece D; 14 - second support; 15 - upper restraint ring; 16 - lower restraint ring; 17 - sleeve; 18 - handle; 19 - support pipe; 20 - pressing ring; 21 - screw C; 22 - carbon fiber bundle.

## DETAILED DESCRIPTION

The present invention will be described in detail below in conjunction with the drawings and embodiments.

This embodiment provides a carbon fiber bundle sample preparation device for preparing a carbon fiber bundle sample, and for the carbon fiber bundle sample prepared with the device, the axial thermal diffusivity of carbon fibers can be measured by the flash method.

The carbon fiber bundle sample preparation device comprises a pre-pressing and straightening assembly, a restraint ring assembly and an edge cutting assembly.

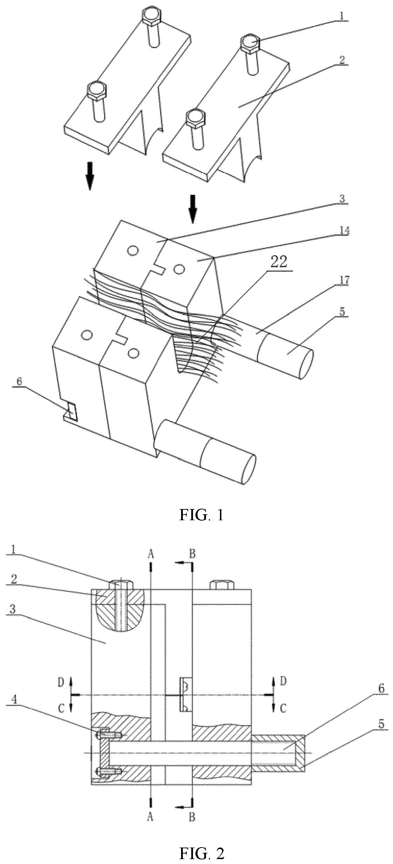

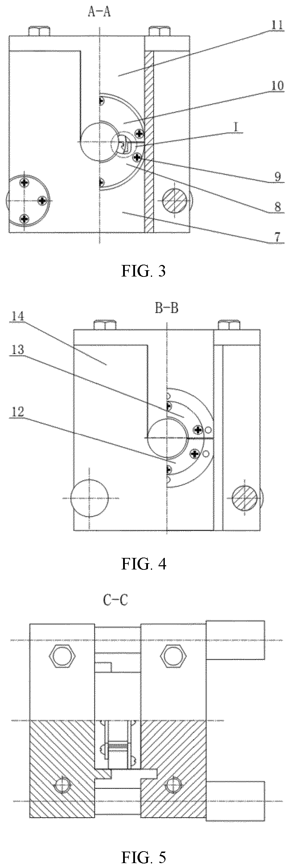

As shown in FIGS. 1 to 6, the pre-pressing and straightening assembly comprises: a first support 3, a second support 14, two T-shaped pressing blocks 2, guide rails 6, positioning nuts 5, sleeves 17 and coupling fasteners, wherein the coupling fasteners comprise hexagonal head bolts 1 and screws A 4.

The connection relationship is that the first support 3 and the second support 14 are each provided with a U-shaped groove penetrating through the front and rear end faces thereof, and when the first support 3 and the second support 14 are butted in parallel, positions of the two U-shaped grooves are opposite. The front end face of the first left support 3 is caused to be butted with the rear end face of the second support 14. In order to achieve the precise butt joint of the two U-shaped grooves, on the front end face of the first left support 3, the left and right ends of the U-shaped groove are each provided with a strip-shaped boss in the height direction of the U-shaped groove, and on the rear end face of the second support 14, the left and right ends of the U-shaped groove are each provided with a strip-shaped groove matched with the strip-shaped boss. In addition, the bottoms of the first support 3 and the second support 14, at the left and right ends of each U-shaped groove, are each provided with a through hole for mounting the guide rail 6, the guide rails 6 pass through the through holes at the bottoms of the first left support 3 and the second support 14 to connect the first left support 3 and the second support 14 together. The rear end of each guide rail 6 is fixed to the first support 3 through the screws A 4, and after the front end of each guide rail 6 passes through the second support 14, its extending end is connected with the sleeve 17 and the positioning nut 5 in sequence, thereby ensuring tight jointing of the strip-shaped bosses on the first support 3 and the strip-shaped grooves on the second support 14, and achieving that the planes and curved surfaces of the U-shaped grooves on the first support 3 and the U-shaped grooves on the second support 14 are completely coplanar in the axial direction of the guide rails.

The bottom of the vertical part of each T-shaped pressing block 2 is provided with a semicircular groove, so that the bottom surface of the vertical part is in a concave semicircular arc shape, the width of the vertical part of the T-shaped pressing block 2 is slightly smaller than the width of the U-shaped groove, the vertical parts of the two T-shaped pressing blocks 2 are inserted into the U-shaped grooves on the first left support 3 and the second support 14 respectively, and the semicircular groove at the bottom of the vertical part of each T-shaped pressing block 2 is butted with the semicircular concave surface at the bottom of the corresponding U-shaped groove to form a circular groove for placement of the carbon fiber bundle. Each T-shaped pressing block 2 is fixedly connected with the corresponding support through the hexagonal head bolts 1 at two ends of the horizontal part of the T-shaped pressing block, and the carbon fiber bundle in the U-shaped grooves is pre-pressed by the T-shaped pressing blocks 2.

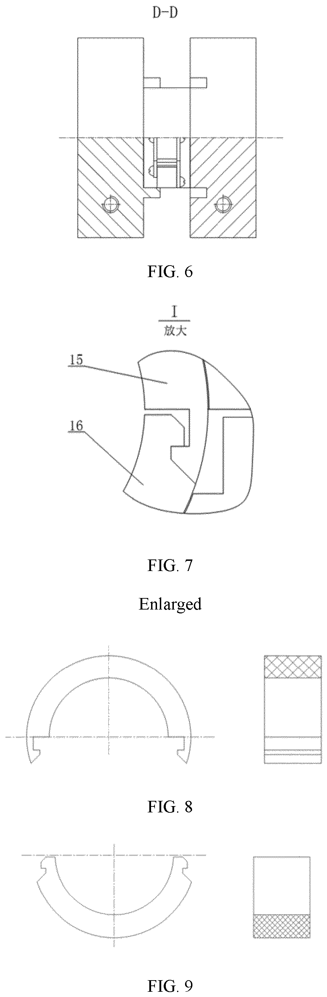

The restraint ring assembly comprises a restraint ring, an upper restraint ring positioning component and a lower restraint ring positioning component. As shown in FIGS. 8-10, the restraint ring is formed by butting two semicircular rings capable of being snap-fitted, the two semicircular rings are an upper restraint ring 15 and a lower restraint 16 respectively, and the upper restraint ring 15 and the lower restraint 16 form a full circle after butt joint. The upper restraint ring 15 and the lower restraint 16 are connected in a snap-fitted form at the butt joint, and thus cannot be separated in the radial direction, and the carbon fiber bundle is restrained in the restraint ring.

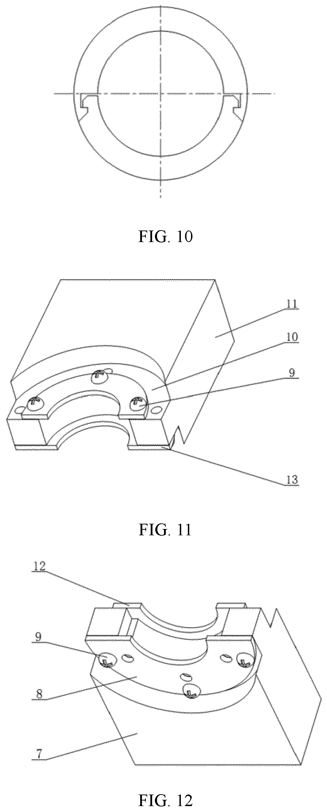

As shown in FIG. 11, the upper restraint ring positioning component comprises an upper restraint ring bracket 11,

a positioning piece B 10, a positioning piece D 13 and coupling fasteners, wherein the coupling fasteners are screws B 9. One end of the upper restraint ring bracket 11 is of a semicircular structure with the same arc as the upper restraint ring 15, the upper restraint ring 15 is placed on an arc surface of the semicircular structure, the positioning piece B 10 and the positioning piece D 13 are mounted on end faces of two sides of the semicircular structure of the upper restraint ring bracket 11 respectively through the screws B 9 to clamp the upper restraint ring 15 located therebetween, so as to position the upper restraint ring 15, thereby limiting the axial and radial displacements of the upper restraint ring 15 through the positioning piece B 10, the positioning piece D 13 and the arc surface of the semicircular structure to prevent the upper restraint ring 15 from rotating and falling off from the upper restraint ring bracket 11.

The structure of the lower restraint ring positioning component is the same as that of the upper restraint ring positioning component, as shown in FIG. 12, the lower restraint ring positioning component specifically comprises a lower restraint ring bracket 7, a positioning piece A 8, a positioning piece C 12 and coupling fasteners, wherein the coupling fasteners are screws B 9. One end of the lower restraint ring bracket 7 is of a semicircular structure with the same arc as the lower restraint 16, the lower restraint 16 is placed on an arc surface of the semicircular structure, the positioning piece A 8 and the positioning piece C 12 are mounted on end faces of two sides of the semicircular structure of the lower restraint ring bracket 7 respectively through the screws B 9 to clamp the lower restraint ring 16 located therebetween, so as to realise positioning of the lower restraint ring 16, thereby limiting the axial and radial displacements of the lower restraint ring 16 through the positioning piece A 8, the positioning piece C 12 and the arc surface of the semicircular structure to prevent the lower restraint ring 16 from rotating and falling off from the lower restraint ring bracket 7.

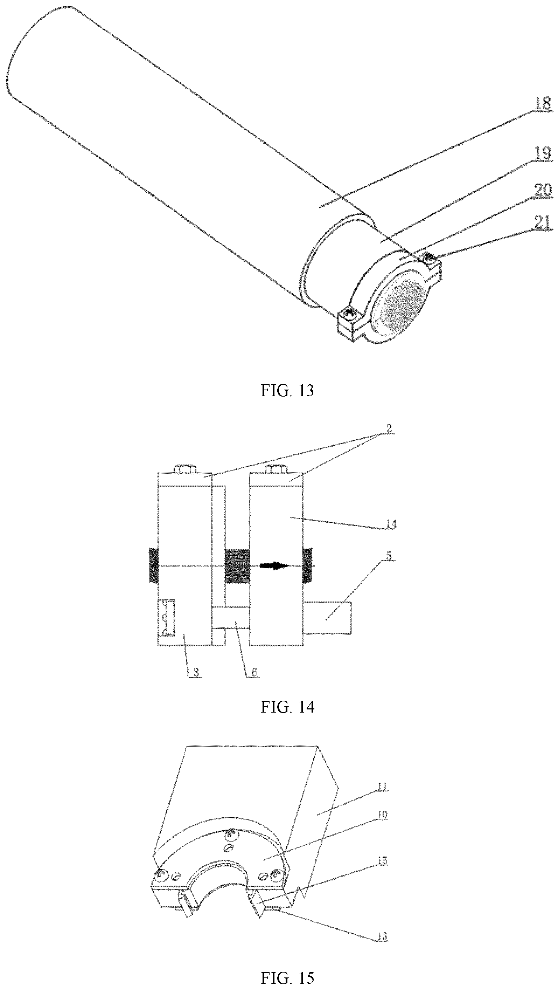

As show in FIG. 13, the edge cutting assembly comprises a clamping device for clamping the restraint ring restraining the carbon fiber bundle, and a cutter for cutting edges of the clamped carbon fiber bundle to obtain a carbon fiber bundle sample. Wherein, the clamping device comprises a handle 18, a support pipe 19, a pressing ring 20 and screws C 21. Wherein, the handle 18 is of a hollow pipe structure, and internal threads are formed on the inner circumference of one end of the handle. The support pipe 19 is of a hollow stepped hole structure, one end of which is provided with external threads matched with the internal threads of the handle 18, and the handle 18 and the support pipe 19 are coaxially connected through threaded connection. The other end of the support pipe 19 is of a semicircular structure, which is provided with bosses at two radial ends. The pressing ring 20 is of a semicircular structure with the same radius as the semicircular structure at the end part of the support pipe 19, and is also provided with bosses at two radial ends. Wherein, the inner diameter of the semicircular structure at the end part of the support pipe 19 is slightly smaller than or equal to the outer diameter of the restraint ring (thus being capable of clamping the restraint ring when matched with the restraint ring), and the inner hole radius of the part with external threads is smaller than the inner hole radius of the part with the boss, so as to form a shaft shoulder inside the support pipe 19. After the restraint ring restraining the carbon fiber bundle is placed inside the semicircular structure at the end part of the support pipe 19, the pressing ring 20 and the semicircular structure at the end part of the support pipe 19 are butted, and are connected in a fastening manner by the screws C 21 on the shaft shoulder, so that a tubular structure formed by cooperation of the semicircular structure at the end part of the support pipe 19 and the pressing ring 20 clamps the snap-fitted restraint ring containing the carbon fiber bundle.

The prepared carbon fiber bundle sample for axial thermal conduction property test comprises the restraint ring and the carbon fiber bundle restrained in the restraint ring, and the carbon fiber bundle is in a cylindrical shape formed by arrangement of a plurality of axially parallel carbon fibers to be tested.

The process of preparing the carbon fiber bundle sample using the carbon fiber sample preparation device is as follows:

(1) Calculating the mass M of the desired carbon fiber bundle

The carbon fiber bundle is as compact as possible when being located inside the restraint ring, theoretically up to 80% volume filling rate, properly 50%-80%, preferably a higher volume filling rate.

A bundle of carbon fibers to be tested with the length L and the mass m is selected, and the cross section area $S_c$ of a single carbon fiber to be tested is calculated from Formula (1) according to the specific gravity $\rho$ of the carbon fiber to be tested:

$$S_c = \frac{m}{\rho L} \qquad\qquad (1)$$

From formula (2), the inner hole section area $S_y$ of the restraint ring is calculated according to the inner diameter D of the restraint ring:

$$S_y = \frac{\pi D^2}{4} \qquad\qquad (2)$$

Setting a volume filling rate K, the cross section area S of the carbon fiber bundle with the volume filling rate K is obtained from Formula (3):

$$S=KS_y \quad (3)$$

From Formula (4), the scale coefficient of S and $S_c$ is derived:

$$\emptyset = \frac{S}{S_c} \qquad\qquad (4)$$

the mass of carbon fibers required to reach the volume filling rate K is M=Øm.

(2) Pressing the carbon fiber bundle

Carbon fibers to be tested, with the mass M, are weighed to form a carbon fiber bundle. After the carbon fiber bundle is horizontally placed in the U-shaped grooves formed by coplanes after the first support 3 and the second support 14 are in butt joint, the semicircular grooves on the two T-shaped pressing blocks 2 are downwards inserted into the U-shaped grooves of the first support 3 and the second support 14 respectively, and the hexagonal head bolts are screwed in to pre-press the carbon fiber bundle through the T-shaped pressing blocks 2.

(3) Straightening the carbon fiber bundle

The positioning nuts 5 and the sleeves 17 are taken down from the guide rails 6 in sequence, and then the positioning nuts 5 are screwed in onto the guide rails 6. As shown in FIG. 14, the hexagonal head bolts 1 on the second support 14 are unscrewed until the second support 14 and the T-shaped pressing blocks 2 can move forward along the guide rails 6, the movement stops when the second support 14 and the T-shaped pressing blocks 2 cling to the positioning nuts 5, thereby completing straightening of the carbon fiber bundle, and the hexagonal head bolts 1 on the second support 14 are screwed to press the carbon fiber bundle.

(4) Assembling the restraint ring components

As shown in FIG. 15, the upper restraint ring 15 is placed in the semicircular groove of the upper restraint ring bracket 11. Since the thickness of the semicircular groove of the upper restraint ring bracket 11 is slightly smaller than the thickness of the upper restraint ring 15, the positioning piece B 10 and the positioning piece D 13 can be mounted on two sides of the upper restraint ring bracket 11 respectively by the screws B 9 to clamp and position the upper restraint ring 15, and the upper restraint ring 15 and the upper restraint ring positioning component are assembled to form an upper restraint ring component.

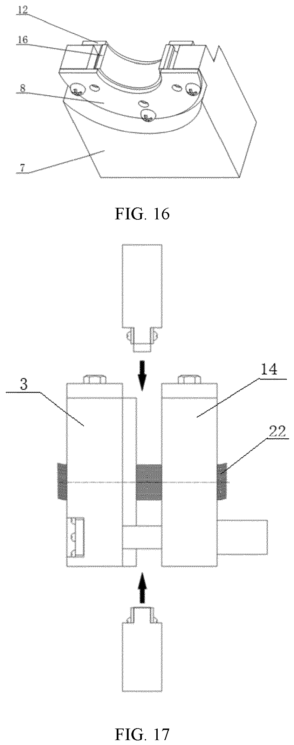

As shown in FIG. 16, the lower restraint ring 16 is placed in the semicircular groove of the lower restraint ring bracket 7. Since the thickness of the semicircular groove part of the lower restraint ring bracket 7 (with the thickness the same as the semicircular groove part of the upper restraint ring 15) is slightly smaller than the thickness of the lower restraint ring 16, the positioning piece A 8 and the positioning piece C 12 can be mounted on two sides of the lower restraint ring bracket 7 respectively by the screws B 9 to clamp and position the lower restraint ring 16. The lower restraint ring 16 and the lower restraint ring positioning component are assembled to form a lower restraint ring component.

(5) Restraining the carbon fiber bundle

As shown in FIG. 17, the upper restraint ring component is put into a space between the first support 3 and the second support 14 from top to bottom, and the lower restraint ring component is put into the space from bottom to top, wherein the semicircular grooves of the upper restraint ring bracket 11 and the lower restraint ring bracket 7 are opposite. In order to realise the guidance for the upper restraint ring component and the lower restraint ring component, the widths of the upper restraint ring bracket 11 and the lower restraint ring bracket 7 are designed to be the same as the distance between the two strip-shaped projections on the first support 3 in size, so that the upper restraint ring component and the lower restraint ring component are guided by the two strip-shaped projections on the first support 3, and thus the upper restraint ring component and the lower restraint ring component can be vertically butted. In actual operation, the bottom surfaces of the lower restraint ring component, the first support 3 and the second support 14 are placed on an operating platform, a certain pressure is applied to the upper restraint ring component from above until the top of the upper restraint ring component is at the same level as the top surfaces of the T-shaped pressing blocks 2, and at this time, the upper restraint ring 15 and the lower restraint ring 16 are snap-fitted together to form a restraint ring, thereby retraining the carbon fiber bundle by the restraint ring.

(6) Taking out the carbon fiber bundle restrained by the restraint ring

The hexagonal head bolts 1 are unscrewed to remove the T-shaped pressing blocks 2; and the positioning nuts 5 are unscrewed to remove the second support 14 from the guide rails 6. Fastening screws on the positioning pieces on the same side of the upper and lower restraint ring components are unscrewed in sequence to take out the carbon fiber bundle restrained by the restraint ring.

(7) Completing preparation of the carbon fiber bundle sample

The long parts, extending out of two ends of the restraint ring, of the taken-out carbon fiber bundle restrained by the restraint ring are cut short appropriately for subsequent edge cutting. As shown in FIG. 13, the carbon fiber bundle to be subjected to edge cutting is placed inside the semicircular structure at the end part of the support pipe 19 of an edge cutting tool, the axial direction of the carbon fiber bundle is positioned by the stepped hole shaft shoulder inside the support pipe 19, the pressing ring 20 and the semicircular structure at the end part of the support pipe 19 are butted and fixed by the screws 21, and by cooperating with the formed tubular structure clamping the snap-fitted restrained ring containing the carbon fiber bundle, the cutter cuts off redundant carbon fibers by clinging to the edges of the end parts of the restraint ring. After completion of cutting, the carbon fiber bundle at the other end of the restraint ring is subjected to edge cutting by this method, and thus a carbon fiber bundle sample with the same thickness as the restraint ring is formed.

## Claims

1.   A carbon fiber bundle sample preparation device comprising a pre-pressing and straightening assembly, a restraint ring assembly and an edge cutting assembly, wherein

   the pre-pressing and straightening assembly is used to press and straighten carbon fibers forming a carbon fiber bundle, so as to obtain a cylindrical carbon fiber bundle;
   the restraint ring assembly comprises an upper restraint ring (15) and a lower restraint ring (16), the upper restraint ring (15) and the lower restraint ring (16) are two semicircular rings capable of being snap-fitted, and form a full circle after butt joint to serve as a restraint ring, and the cylindrical carbon fiber bundle is restrained in the restraint ring; and
   the edge cutting assembly comprises a clamping device for clamping the restraint ring restraining the carbon fiber bundle, and a cutter for cutting edges of the clamped carbon fiber bundle to obtain a carbon fiber bundle sample,

   **characterized in that** the pre-pressing and straightening assembly comprises a first support (3), a second support (14), two T-shaped pressing blocks (2), guide rails (6), positioning nuts (5), sleeves (17) and coupling fasteners;

   the first support (3) and the second support (14) are each provided with a U-shaped groove penetrating through the front and rear end faces of the first support and the second support,
   on the end face of the first left support (3) opposite to the second support (14), the left and right ends of the U-shaped groove are each provided with a strip-shaped boss in the height direction of the U-shaped groove;
   on the end face of the second support (14) opposite to the first left support (3), the left and right ends of the U-shaped groove are each provided with a strip-shaped groove matched with the strip-shaped boss;
   the strip-shaped boss and the strip-shaped groove are butt-joint positioning surfaces of the first support (3) and the second support (14), and when the first support (3) and the second support (14) are butted, the strip-shaped bosses on the first support (3) are located in the strip-shaped grooves on the second support (14) to ensure that the planes and curved surfaces of the two U-shaped grooves are coplanar in the axis direction of the guide rail (6);
   the bottoms of the first support (3) and the second support (14), at the left and right ends of the U-shaped groove, are each provided with a through hole for mounting the guide rail (6), the guide rails (6) pass through the through holes at the bottoms of the first support (3) and the second support (14) to connect the first support (3) and the second support (14) in series; one end of the guide rail (6) is fixed to the first support (3) by the coupling fastener, and after the other end of the guide rail (6) passes through the second support (14), the extending end is connected with the sleeve (17) and the positioning nut (5) in sequence; and

the bottom of a vertical part of the T-shaped pressing block (2) is provided with a semicircular groove, the vertical parts of the two T-shaped pressing blocks (2) are inserted into the U-shaped grooves on the first support (3) and the second support (14) respectively, and the semicircular groove at the bottom of the vertical part of the T-shaped pressing block (2) is butted with the semicircular concave surface at the bottom of the U-shaped groove to form a circular hole for placement of the carbon fiber bundle; and the two T-shaped pressing blocks (2) are fixedly connected with the supports corresponding thereto respectively by the coupling fasteners.

2. The carbon fiber bundle sample preparation device of claim 1, **characterized in that** the clamping device in the edge cutting assembly comprises a handle (18), a support pipe (19) and a pressing ring (20); the handle (18) is of a hollow pipe structure, and internal threads are formed on the inner circumference of one end of the handle; one end of the support pipe (19) is provided with external threads matched with the internal threads of the handle (18), and the handle (18) and the support pipe (19) are coaxially connected through threaded connection; the other end of the support pipe is of a semicircular structure; the pressing ring (20) is of a semicircular structure with the same radius as the semicircular structure at the end part of the support pipe (19); the semicircular structure at the end part of the support pipe (19) and the pressing ring (20) are butted and fixed to form a tubular structure to clamp the restraint ring restraining the carbon fiber bundle; and a shaft shoulder for axially limiting the carbon fiber bundle is disposed inside the support pipe (19).

3. A preparation method of a carbon fiber bundle sample, using the carbon fiber bundle sample preparation device of claim 1 or 2, **characterized by** comprising:

step 1: calculating the mass M of carbon fibers to be tested required to reach a set volume filling rate;
step 2: pressing a carbon fiber bundle
weighing carbon fibers to be tested, with the mass M, to form the carbon fiber bundle; horizontally placing the carbon fiber bundle in the U-shaped grooves after the first support (3) and the second support (14) are in butt joint, inserting the vertical parts of the two T-shaped pressing blocks (2) into the U-shaped grooves of the first support (3) and the second support (14) respectively, and fixedly connecting the two T-shaped pressing blocks (2) with the supports corresponding thereto respectively by the coupling fasteners to pre-press the carbon fiber bundle in the U-shaped grooves through the T-shaped pressing blocks (2);
step 3: straightening the carbon fiber bundle
taking down the positioning nuts (5) and the sleeves (17) from the guide rails (6) in sequence, and then screwing in the positioning nuts (5) onto the guide rails (6); unscrewing the fasteners, for connecting the T-shaped pressing blocks (2), on the second support (14) so that the second support (14) can move along the guide rail (6), and the movement stops when the second support makes contact with the positioning nuts (5), thereby completing straightening of the carbon fiber bundle, and screwing the fasteners, for connecting the T-shaped pressing blocks (2), on the second support (14) to press the carbon fiber bundle;
step 4: restraining the carbon fiber bundle
positioning the upper restraint ring (15) by an upper restraint ring positioning component to form an upper restraint ring component, and positioning the lower restraint ring (16) by a lower restraint ring positioning component to form a lower restraint ring component; putting the upper restraint ring component into a space between the first support (3) and the second support (14) from top to bottom, and putting the lower restraint ring component into the space from bottom to top, so that the upper restraint ring (15) and the lower restraint ring (16) are snap-fitted together to form a restraint ring to restrain the carbon fiber bundle in the restraint ring;
step 5: taking out the carbon fiber bundle restrained by the restraint ring
removing the T-shaped pressing blocks (2) and the second support (14), and releasing positioning of the upper restraint ring (15) by the upper restraint ring positioning component and positioning of the lower restraint ring (16) by the lower restraint ring positioning component respectively to take out the restraint ring in which the carbon fiber bundle is restrained; and
step 6: cutting edges of the carbon fiber bundle
clamping the restraint ring by the clamping device in the edge cutting assembly, and performing edge cutting on the parts, extending out of the restraint ring, of two ends of the carbon fiber bundle to form a carbon fiber bundle sample with the same thickness as the restraint ring.

4. The preparation method of a carbon fiber bundle sample of claim 3, **characterized in that** in step 1, the method for calculating the mass M of carbon fibers to be tested required to reach a set volume filling rate is as follows:

a bundle of carbon fibers to be tested with the length L and the mass m is selected, and the cross section area $S_c$ of a single carbon fiber to be tested is calculated from Formula (1) according to the specific gravity ρ of the carbon fiber to be tested:

$$S_c = \frac{m}{\rho L} \qquad (1)$$

the inner hole section area $S_y$ of the restraint ring is calculated from Formula (2) according to the inner diameter D of the restraint ring:

$$S_y = \frac{\pi D^2}{4} \qquad (2)$$

setting a volume filling rate K, the cross section area S of the carbon fiber bundle sample with the volume filling rate K is obtained from Formula (3):

$$S = K S_y \quad (3)$$

from Formula (4), the scale coefficient of S and $S_c$ is derived:

$$\emptyset = \frac{S}{S_c} \qquad (4)$$

the mass M of the carbon fibers to be tested required to reach the volume filling rate K is: M= Øm.

5. The preparation method of a carbon fiber bundle sample of claim 3, **characterized in that** in step 4, the upper restraint ring positioning component for positioning the upper restraint ring (15) comprises: an upper restraint ring bracket (11), a positioning piece B (10) and a positioning piece D (13); one end of the upper restraint ring bracket (11) is of a semicircular structure with the same radius as the upper restraint ring (15), the upper restraint ring (15) is placed on an arc surface of the semicircular structure, the positioning piece B (10) and the positioning piece D (13) are mounted on end faces of two sides of the semicircular structure of the upper restraint ring bracket (11) respectively through fastening connectors to clamp the upper restraint ring (15) located therebetween; and
the structure of the lower restraint ring positioning component for positioning the lower restraint ring (16) is the same as the structure of the upper restraint ring positioning component.

6. The preparation method of a carbon fiber bundle sample of claim 3, **characterized in that** on the end face of the first left support (3) opposite to the second support (14), the left and right ends of the U-shaped groove are each provided with a strip-shaped boss in the height direction of the U-shaped groove;

on the end face of the second support (14) opposite to the first left support (3), the left and right ends of the U-shaped groove are each provided with a strip-shaped groove matched with the strip-shaped boss;
the strip-shaped boss and the strip-shaped groove are butt-joint positioning surfaces of the first support (3) and the second support (14), and when the first support (3) and the second support (14) are butted, the strip-shaped bosses on the first support (3) are located in the strip-shaped grooves on the second support (14);
the widths of the upper restraint ring bracket (11) and a lower restraint ring bracket (7) are the same as the distance between the two strip-shaped projections on the first support (3) in size, and in step 4, when the upper restraint ring component and the lower restraint ring component are put between the first support (3) and the second support (14) from top to bottom and from bottom to top respectively, the upper restraint ring component and the lower restraint ring component are guided through the two strip-shaped projections.

7. The preparation method of a carbon fiber bundle sample of claim 3, **characterized in that** in step 6, before the restraint ring is clamped by the clamping device in the edge cutting assembly, the parts, extending out of the restraint ring, of two ends of the carbon fiber bundle sample are cut short to a set length first.

**Patentansprüche**

1. Vorrichtung zur Vorbereitung von Kohlefaserbündelproben, umfassend eine Vorpress- und Richtbaugruppe, eine Rückhalteringbaugruppe und eine Kantenschneidebaugruppe, wobei

die Vorpress- und Richtbaugruppe zum Pressen und Richten von Kohlefasern verwendet wird, die ein Kohlefaserbündel bilden, um ein zylindrisches Kohlefaserbündel zu erhalten;
die Rückhalteringbaugruppe einen oberen Rückhaltering (15) und einen unteren Rückhaltering (16) umfasst, wobei der obere Rückhaltering (15) und der untere Rückhaltering (16) zwei halbkreisförmige Ringe sind, die ineinander einrasten können und nach einem Stoßverbinden einen Vollkreis bilden, um als Rückhaltering zu dienen, und das zylindrische Kohlefaserbündel in dem Rückhaltering zurückgehalten wird; und
die Kantenschneidebaugruppe eine Klemmvorrichtung zum Festklemmen des das Kohlefaserbündel zurückhaltenden Rückhalterings und einen Schneider zum Schneiden von Kanten des festgeklemmten Kohlefaserbündels umfasst, um eine Kohlefaserbündelprobe zu erhalten,

**dadurch gekennzeichnet, dass** die Vorpress- und Richtbaugruppe eine erste Stütze (3), eine zweite Stütze (14), zwei T-förmige Pressblöcke (2), Führungsschienen (6), Positioniermuttern (5), Hülsen (17) und Kupplungsbefestigungen umfasst;

die erste Stütze (3) und die zweite Stütze (14) jeweils mit einer U-förmigen Nut versehen sind, die durch die vordere und hintere Endfläche der ersten Stütze und der zweiten Stütze hindurchgeht,
an der Endfläche der ersten linken Stütze (3) gegenüber der zweiten Stütze (14) das linke und das rechte Ende der U-förmigen Nut jeweils mit einem streifenförmigen Vorsprung in Höhenrichtung der U-förmigen Nut versehen sind;
an der Endfläche der zweiten Stütze (14) gegenüber der ersten linken Stütze (3) das linke und das rechte Ende der U-förmigen Nut jeweils mit einer streifenförmigen Nut versehen sind, die mit dem streifenförmigen Vorsprung übereinstimmt;
der streifenförmige Vorsprung und die streifenförmige Nut Positionierungsflächen der ersten Stütze (3) und der zweiten Stütze (14) für eine Stoßverbindung sind, und wenn die erste Stütze (3) und die zweite Stütze (14) stoßverbunden sind, sich die streifenförmigen Vorsprünge an der ersten Stütze (3) in den streifenförmigen Nuten an der zweiten Stütze (14) befinden, um sicherzustellen, dass die Ebenen und gekrümmten Oberflächen der beiden U-förmigen Nuten in der Achsenrichtung der Führungsschiene (6) koplanar sind;
die Unterseiten der ersten Stütze (3) und der zweiten Stütze (14) am linken und rechten Ende der U-förmigen Nut jeweils mit einem Durchgangsloch zur Montage der Führungsschiene (6) versehen sind, die Führungsschienen (6) durch die Durchgangslöcher an den Unterseiten der ersten Stütze (3) und der zweiten Stütze (14) verlaufen, um die erste Stütze (3) und die zweite Stütze (14) in Reihe zu verbinden; ein Ende der Führungsschiene (6) an der ersten Stütze (3) durch den Kupplungsverschluss befestigt ist, und nachdem das andere Ende der Führungsschiene (6) durch die zweite Stütze (14) hindurchgeht, das verlängerte Ende nacheinander mit der Hülse (17) und der Positionierungsmutter (5) verbunden ist; und
die Unterseite eines vertikalen Teils des T-förmigen Pressblocks (2) mit einer halbkreisförmigen Nut versehen ist, die vertikalen Teile der beiden T-förmigen Pressblöcke (2) in die U-förmigen Nuten an der ersten Stütze (3) bzw. der zweiten Stütze (14) eingeführt werden und die halbkreisförmige Nut an der Unterseite des vertikalen Teils des T-förmigen Pressblocks (2) an die halbkreisförmige konkave Fläche an der Unterseite der U-förmigen Nut anstößt, um ein kreisförmiges Loch für die Platzierung des Kohlefaserbündels zu bilden; und die beiden T-förmigen Pressblöcke (2) durch die Kupplungsbefestigungen fest mit den entsprechenden Stützen verbunden sind.

2. Vorrichtung zur Vorbereitung von Kohlefaserbündelproben nach Anspruch 1, **dadurch gekennzeichnet, dass** die Klemmvorrichtung in der Kantenschneidebaugruppe einen Griff (18), ein Stützrohr (19) und einen Pressring (20) umfasst; der Griff (18) eine Hohlrohrstruktur aufweist und Innengewinde am Innenumfang eines Endes des Griffs ausgebildet sind; ein Ende des Stützrohrs (19) mit Außengewinden versehen ist, die mit den Innengewinden des Griffs (18) übereinstimmen, und der Griff (18) und das Stützrohr (19) durch eine Gewindeverbindung koaxial miteinander verbunden sind; das andere Ende des Stützrohrs halbkreisförmig ist; der Pressring (20) halbkreisförmig ist und denselben Radius wie die Struktur am Endteil des Stützrohrs (19) hat; die halbkreisförmige Struktur am Endteil des Stützrohrs (19) und der Pressring (20) aneinandergefügt und fixiert sind, um eine röhrenförmige Struktur zu bilden, um den Haltering festzuklemmen, der das Kohlefaserbündel zurückhält; und einen Wellenansatz zur axialen Begrenzung des Kohlefaserbündels, der im Inneren des Stützrohrs (19) angeordnet ist.

3. Verfahren zur Vorbereitung einer Kohlefaserbündelprobe unter Verwendung der Vorrichtung zur Vorbereitung von Kohlefaserbündelproben nach Anspruch 1 oder 2, **dadurch gekennzeichnet, dass** es umfasst:

Schritt 1: Berechnung der Masse M der zu prüfenden Kohlefasern, die erforderlich ist, um eine festgelegte Volumenfüllrate zu erreichen;

Schritt 2: Pressen eines Kohlefaserbündels

Wiegen der zu prüfenden Kohlefasern, mit der Masse M, um das Kohlefaserbündel zu bilden; horizontales Anordnen des Kohlefaserbündels in den U-förmigen Nuten, nachdem die erste Stütze (3) und die zweite Stütze (14) in einer Stoßverbindung sind, Einsetzen der vertikalen Teile der zwei T-förmigen Pressblöcke (2) in die entsprechenden Nuten der ersten Stütze (3) und der zweiten Stütze (14) und fest Verbinden der beiden T-förmigen Pressblöcke (2) mit den entsprechenden Stützen jeweils durch die Kupplungsbefestigungen, um das Kohlefaserbündel in den U-förmigen Nuten durch die T-förmigen Pressblöcke (2) vorzupressen;

Schritt 3: Ausrichten des Kohlefaserbündels

Abnehmen der Positioniermuttern (5) und der Hülsen (17) von den Führungsschienen (6) nacheinander und dann Schrauben der Positioniermuttern (5) auf die Führungsschienen (6); Abschrauben der Befestiger zum Verbinden der T-förmigen Pressblöcke (2) von der zweiten Stütze (14), so dass sich die zweite Stütze (14) entlang der Führungsschiene (6) bewegen kann und die Bewegung stoppt, wenn die zweite Stütze die Positionierungsmuttern (5) berührt, wodurch das Ausrichten des Kohlefaserbündels abgeschlossen ist, und Anschrauben der Befestiger zum Verbinden der T-förmigen Pressblöcke (2) auf die zweite Stütze (14), um das Kohlefaserbündel zu pressen;

Schritt 4: Zurückhalten des Kohlefaserbündels

Positionieren des oberen Rückhalterings (15) durch eine obere Rückhalteringpositionierungskomponente, um eine obere Rückhalteringkomponente zu bilden, und Positionieren des unteren Rückhalterings (16) durch eine untere Rückhalteringpositionierungskomponente, um eine untere Rückhalteringkomponente zu bilden; Einsetzen der oberen Fixierringkomponente in einen Raum zwischen der ersten Stütze (3) und der zweiten Stütze (14) von oben nach unten, und Einsetzen der unteren Rückhalteringkomponente in den Zwischenraum von unten nach oben, so dass der obere Rückhaltering (15) und der untere Rückhaltering (16) ineinander einrasten und einen Rückhaltering bilden, um das Kohlefaserbündel im Rückhaltering zurückzuhalten;

Schritt 5: Herausnehmen des durch den Rückhaltering zurückgehaltenen Kohlefaserbündels

Entfernen der T-förmigen Pressblöcke (2) und der zweiten Stütze (14) und Lösen der Positionierung des oberen Rückhalterings (15) durch die obere Rückhalteringpositionierungskomponente bzw. der Positionierung des unteren Rückhalterings (16) durch die untere Rückhalteringpositionierungskomponente, um den Rückhaltering herauszunehmen, in dem das Kohlefaserbündel zurückgehalten wird; und

Schritt 6: Schneiden der Kanten des Kohlefaserbündels,

Einklemmen des Rückhalterings durch die Klemmvorrichtung in der Kantenschneideinbaugruppe, und Schneiden der Kanten der Teile, die aus dem Rückhaltering herausragen, von zwei Enden des Kohlefaserbündels, um eine Kohlefaserbündelprobe mit der gleichen Dicke wie der Rückhaltering zu bilden.

4. Verfahren zur Vorbereitung einer Kohlefaserbündelprobe nach Anspruch 3, **dadurch gekennzeichnet, dass** in Schritt 1 das Verfahren zur Berechnung der Masse M der zu prüfenden Kohlefasern, die erforderlich ist, um eine festgelegte Volumenfüllrate zu erreichen, wie folgt ist:

ein Bündel zu prüfender Kohlefasern mit der Länge L und der Masse m wird ausgewählt, und die Querschnittsfläche $S_c$ einer einzelnen zu prüfenden Kohlefaser wird aus Formel (1) gemäß dem spezifischen Gewicht p der zu prüfenden Kohlefaser berechnet:

$$S_c = \frac{m}{pL} \hspace{5cm} (1)$$

die Fläche des inneren Lochabschnitts $S_y$ des Rückhalterings wird nach Formel (2) entsprechend dem Innendurchmesser D des Rückhalterings berechnet:

$$S_y = \frac{\pi D^2}{4} \hspace{5cm} (2)$$

durch Festlegung einer Volumenfüllrate K wird die Querschnittsfläche S der Kohlefaserbündelprobe mit der Volumenfüllrate K aus Formel (3) ermittelt:

$$S = KS_y (3)$$

aus Formel (4) wird der Skalierungskoeffizient von S und $S_c$ abgeleitet:

$$\emptyset = \frac{S}{S_c} \qquad\qquad (4)$$

die Masse M der zu prüfenden Kohlefasern, die erforderlich ist, um die Volumenfüllrate K zu erreichen, beträgt: M = Øm.

5. Verfahren zur Vorbereitung einer Kohlefaserbündelprobe nach Anspruch 3, **dadurch gekennzeichnet, dass** in Schritt 4 die obere Rückhalteringpositionierungskomponente zum Positionieren des oberen Rückhalterings (15) umfasst: eine obere Rückhalteringhalterung (11), ein Positionierungsstück B (10) und ein Positionierungsstück D (13); ein Ende der oberen Rückhalteringhalterung (11) weist eine halbkreisförmige Struktur mit demselben Radius wie der oberen Rückhaltering (15) auf, wobei der obere Rückhaltering (15) auf einer Bogenfläche der halbkreisförmigen Struktur angeordnet ist, wobei das Positionierungsstück B (10) und das Positionierungsstück D (13) jeweils an Endflächen von zwei Seiten der halbkreisförmigen Struktur der oberen Rückhalteringhalterung (11) durch Befestigungsverbinder angebracht sind, um den oberen Rückhaltering (15), der sich dazwischen befindet, festzuklemmen; und
die Struktur der unteren Rückhalteringpositionierungskomponente zum Positionieren des unteren Rückhalterings (16) dieselbe ist, wie die Struktur der oberen Rückhalteringpositionierungskomponente.

6. Verfahren zur Vorbereitung einer Kohlefaserbündelprobe nach Anspruch 3, **dadurch gekennzeichnet, dass** an der Endfläche der ersten linken Stütze (3) gegenüber der zweiten Stütze (14) das linke und das rechte Ende der U-förmigen Nut jeweils mit einem streifenförmigen Vorsprung in Höhenrichtung der U-förmigen Nut versehen sind;

an der Endfläche der zweiten Stütze (14) gegenüber der ersten linken Stütze (3) das linke und das rechte Ende der U-förmigen Nut jeweils mit einer streifenförmigen Nut versehen sind, die mit dem streifenförmigen Vorsprung übereinstimmt;
der streifenförmige Vorsprung und die streifenförmige Nut Positionierungsflächen der ersten Stütze (3) und der zweiten Stütze (14) für eine Stoßverbindung sind, und wenn die erste Stütze (3) und die zweite Stütze (14) stoßverbunden sind, sich die streifenförmigen Vorsprünge an der ersten Stütze (3) in den streifenförmigen Nuten an der zweiten Stütze (14) befinden;
die Breiten der oberen Rückhalteringhalterung (11) und einer unteren Rückhalteringhalterung (7) genauso groß sind, wie der Abstand zwischen den beiden streifenförmigen Vorsprüngen an der ersten Stütze (3), und in Schritt 4, wenn die obere und die untere Rückhalteringkomponente zwischen der ersten Stütze (3) und der zweiten Stütze (14) von oben nach unten bzw. von unten nach oben eingesetzt werden, die obere Rückhalteringkomponente und die untere Rückhalteringkomponente durch die beiden streifenförmigen Vorsprünge geführt werden.

7. Verfahren zur Vorbereitung einer Kohlefaserbündelprobe nach Anspruch 3, **dadurch gekennzeichnet, dass** in Schritt 6, bevor der Rückhaltering durch die Klemmvorrichtung in der Kantenschneidevorrichtung festgeklemmt wird, die aus dem Rückhaltering herausragenden Teile von zwei Enden der Kohlefaserbündelprobe zuerst auf eine festgelegte Länge gekürzt werden.

## Revendications

1. Dispositif de préparation d'échantillon de faisceau de fibres de carbone comprenant un ensemble de pré-pressage et de redressage, un ensemble de bague de retenue et un ensemble de coupe de bords, dans lequel

l'ensemble de pré-pressage et de redressage est utilisé pour presser et redresser des fibres de carbone formant un faisceau de fibres de carbone, de manière à obtenir un faisceau de fibres de carbone cylindrique ;
l'ensemble de bague de retenue comprend une bague de retenue supérieure (15) et une bague de retenue inférieure (16), la bague de retenue supérieure (15) et la bague de retenue inférieure (16) sont deux bagues semi-circulaires aptes à être emboîtées, et forment un cercle complet après l'assemblage bout à bout pour servir de bague de retenue, et le faisceau de fibres de carbone cylindrique est retenu dans la bague de retenue ; et l'ensemble de coupe de bord comprend un dispositif de serrage permettant de serrer la bague de retenue retenant le faisceau de fibres de carbone, et un dispositif de coupe permettant de couper des bords du faisceau de fibres de carbone serré pour obtenir un échantillon de faisceau de fibres de carbone, **caractérisé en ce que** l'ensemble de pré-pressage et de redressage comprend un premier support (3), un second support (14), deux blocs de pressage en forme de T (2), des rails de guidage (6), des écrous de positionnement (5), des manchons (17) et des attaches d'accouplement ;

le premier support (3) et le second support (14) sont chacun dotés d'une rainure en forme de U pénétrant à travers les faces d'extrémité avant et arrière du premier support et du second support,

sur la face d'extrémité du premier support gauche (3) opposée au second support (14), les extrémités gauche et droite de la rainure en forme de U sont chacune dotées d'un bossage en forme de bande dans le sens de la hauteur de la rainure en forme de U ;

sur la face d'extrémité du second support (14) opposée au premier support gauche (3), les extrémités gauche et droite de la rainure en forme de U sont chacune dotées d'une rainure en forme de bande mise en correspondance avec le bossage en forme de bande ;

le bossage en forme de bande et la rainure en forme de bande sont des surfaces de positionnement assemblées bout à bout du premier support (3) et du second support (14), et lorsque le premier support (3) et le second support (14) sont mis bout à bout, les bossages en forme de bande sur le premier support (3) sont situés dans les rainures en forme de bande sur le second support (14) pour garantir que les plans et les surfaces incurvées des deux rainures en forme de U sont coplanaires dans la direction axiale du rail de guidage (6) ;

les fonds du premier support (3) et du second support (14), au niveau des extrémités gauche et droite de la rainure en forme de U, sont chacun dotés d'un trou traversant pour le montage du rail de guidage (6), les rails de guidage (6) passent à travers les trous traversants au niveau des fonds du premier support (3) et du second support (14) pour raccorder le premier support (3) au second support (14) en série ; une extrémité du rail de guidage (6) est fixée au premier support (3) par l'attache d'accouplement, et après que l'autre extrémité du rail de guidage (6) passe à travers le second support (14), l'extrémité en extension est raccordée au manchon (17) et à l'écrou de positionnement (5) en séquence ; et

le fond d'une partie verticale du bloc de pressage en forme de T (2) est doté d'une rainure semi-circulaire, les parties verticales des deux blocs de pressage en forme de T (2) sont insérées dans les rainures en forme de U respectivement sur le premier support (3) et le second support (14), et la rainure semi-circulaire au niveau du fond de la partie verticale du bloc de pressage en forme de T (2) est mise bout à bout avec la surface concave semi-circulaire au niveau du fond de la rainure en forme de U pour former un trou circulaire pour le placement du faisceau de fibres de carbone ; et les deux blocs de pressage en forme de T (2) sont fixement raccordés aux supports correspondants à ceux-ci respectivement par les attaches d'accouplement.

2. Dispositif de préparation d'échantillon de faisceau de fibres de carbone selon la revendication 1, **caractérisé en ce que** le dispositif de serrage dans l'ensemble de coupe de bords comprend une poignée (18), un tuyau de support (19) et une bague de pressage (20); la poignée (18) présente une structure de tuyau creuse, et des filetages internes sont formés sur la circonférence interne d'une extrémité de la poignée ; une extrémité du tuyau de support (19) est dotée de filetages externes mis en correspondance avec les filetages internes de la poignée (18), et la poignée (18) et le tuyau de support (19) sont raccordés coaxialement par le biais d'une liaison filetée ; l'autre extrémité du tuyau de support présente une structure semi-circulaire ; la bague de pressage (20) présente une structure semi-circulaire de même rayon que la structure semi-circulaire au niveau de l'extrémité du tuyau de support (19) ; la structure semi-circulaire au niveau de la partie d'extrémité du tuyau de support (19) et la bague de pressage (20) sont mises bout à bout et fixées pour former une structure tubulaire pour serrer la bague de retenue retenant le faisceau de fibres de carbone ; et un épaulement d'arbre permettant de limiter axialement le faisceau de fibres de carbone est disposé à l'intérieur du tuyau de support (19).

3. Procédé de préparation d'un échantillon de faisceau de fibres de carbone, à l'aide du dispositif de préparation d'échantillon de faisceau de fibres de carbone selon la revendication 1 ou 2, **caractérisé en ce qu'**il comprend :

dans l'étape 1 : le calcul de la masse M de fibres de carbone devant être testées nécessaire pour atteindre un taux de remplissage volumique défini ;
dans l'étape 2 : le pressage d'un faisceau de fibres de carbone
la pesée des fibres de carbone devant être testées, avec la masse M, pour former le faisceau de fibres de carbone ; le placement horizontal du faisceau de fibres de carbone dans les rainures en forme de U après que le premier support (3) et le second support (14) sont assemblés bout à bout, l'insertion des parties verticales des deux blocs de pressage en forme de T (2) dans les rainures en forme de U du premier support (3) et du second support (14) respectivement, et le raccordement fixe des deux blocs de pressage en forme de T (2) avec les supports correspondants à ceux-ci respectivement par les attaches d'accouplement pour pré-presser le faisceau de fibres de carbone dans les rainures en forme de U à travers les blocs de pressage en forme de T (2) ;

dans l'étape 3 : le redressage du faisceau de fibres de carbone

le retrait des écrous de positionnement (5) et des manchons (17) des rails de guidage (6), puis le vissage des écrous de positionnement (5) sur les rails de guidage (6) ; le dévissage des attaches, pour le raccordement des blocs de pressage en forme de T (2), sur le second support (14) de sorte que le second support (14) puisse se déplacer le long du rail de guidage (6), et que le mouvement s'arrête lorsque le second support entre en contact avec les écrous de positionnement (5), achevant ainsi le redressage du faisceau de fibres de carbone, et le vissage des attaches, pour raccorder les blocs de pressage en forme de T (2), sur le second support (14) pour presser le faisceau de fibres de carbone ;

dans l'étape 4 : la retenue du faisceau de fibres de carbone

le positionnement de la bague de retenue supérieure (15) par un composant de positionnement de bague de retenue supérieure pour former un composant de bague de retenue supérieure, et le positionnement de la bague de retenue inférieure (16) par un composant de positionnement de bague de retenue inférieure pour former un composant de bague de retenue inférieure ; la mise en place du composant de bague de retenue supérieure dans un espace entre le premier support (3) et le second support (14) de haut en bas, et la mise en place du composant de bague de retenue inférieure dans l'espace de bas en haut, de sorte que la bague de retenue supérieure (15) et la bague de retenue inférieure (16) soient emboîtées ensemble pour former une bague de retenue pour retenir le faisceau de fibres de carbone dans la bague de retenue ;

dans l'étape 5 : le retrait du faisceau de fibres de carbone retenu par la bague de retenue

le retrait des blocs de pressage en forme de T (2) et du second support (14), et la libération du positionnement de la bague de retenue supérieure (15) par le composant de positionnement de bague de retenue supérieure et du positionnement de la bague de retenue inférieure (16) par le composant de positionnement de bague de retenue inférieure respectivement pour retirer la bague de retenue dans laquelle le faisceau de fibres de carbone est retenu ; et

dans l'étape 6 : la coupe de bords du faisceau de fibres de carbone

le serrage de la bague de retenue par le dispositif de serrage dans l'ensemble de coupe de bords, et la réalisation d'une coupe de bords sur les parties, s'étendant hors de la bague de retenue, de deux extrémités du faisceau de fibres de carbone pour former un échantillon de faisceau de fibres de carbone de même épaisseur que la bague de retenue.

4. Procédé de préparation d'un échantillon de faisceau de fibres de carbone selon la revendication 3, **caractérisé en ce que** dans l'étape 1, le procédé de calcul de la masse M de fibres de carbone devant être testées nécessaire pour atteindre un taux de remplissage volumique défini est le suivant :

un faisceau de fibres de carbone devant être testées avec la longueur L et la masse m est sélectionné, et la zone de section transversale $S_c$ d'une seule fibre de carbone devant être testée est calculée à partir de la Formule (1) en fonction de la densité $\rho$ de la fibre de carbone devant être testée :

$$S_c = \frac{m}{\rho L} \qquad (1)$$

la zone de section de trou interne $S_y$ de la bague de retenue est calculée à partir de la Formule (2) en fonction du diamètre interne D de la bague de retenue :

$$S_y = \frac{\pi D^2}{4} \qquad (2)$$

par la définition d'un taux de remplissage volumique K, la zone de section transversale S de l'échantillon de faisceau de fibres de carbone avec le taux de remplissage volumique K est obtenue à partir de la Formule (3) :

$$S = K S_y \quad (3)$$

à partir de la Formule (4), le coefficient d'échelle de S et $S_c$ est dérivé :

$$\emptyset = \frac{S}{S_c} \qquad\qquad (4)$$

la masse M des fibres de carbone devant être testées nécessaire pour atteindre le taux de remplissage volumique K est : M= Øm.

5. Procédé de préparation d'un échantillon de faisceau de fibres de carbone selon la revendication 3, **caractérisé en ce que** dans l'étape 4, le composant de positionnement de bague de retenue supérieure pour le positionnement de la bague de retenue supérieure (15) comprend : un support de bague de retenue supérieure (11), une pièce de positionnement B (10) et une pièce de positionnement D (13) ; une extrémité du support de bague de retenue supérieure (11) présente une structure semi-circulaire présentant le même rayon que la bague de retenue supérieure (15), la bague de retenue supérieure (15) est placée sur une surface d'arc de la structure semi-circulaire, la pièce de positionnement B (10) et la pièce de positionnement D (13) sont montées sur des faces d'extrémité de deux côtés de la structure semi-circulaire du support de bague de retenue supérieure (11) respectivement par le biais de raccords de fixation pour serrer la bague de retenue supérieure (15) située entre eux ; et la structure du composant de positionnement de bague de retenue inférieure pour le positionnement de la bague de retenue inférieure (16) est la même que la structure du composant de positionnement de bague de retenue supérieure.

6. Procédé de préparation d'un échantillon de faisceau de fibres de carbone selon la revendication 3, **caractérisé en ce que** sur la face d'extrémité du premier support gauche (3) opposée au second support (14), les extrémités gauche et droite de la rainure en forme de U sont chacune dotées d'un bossage en forme de bande dans le sens de la hauteur de la rainure en forme de U ;

sur la face d'extrémité du second support (14) opposée au premier support gauche (3), les extrémités gauche et droite de la rainure en forme de U sont chacune dotées d'une rainure en forme de bande mise en correspondance avec le bossage en forme de bande ; le bossage en forme de bande et la rainure en forme de bande sont des surfaces de positionnement bout à bout du premier support (3) et du second support (14), et lorsque le premier support (3) et le second support (14) sont mis bout à bout, les bossages en forme de bande sur le premier support (3) sont situés dans les rainures en forme de bande sur le second support (14) ; les largeurs du support de bague de retenue supérieure (11) et d'un support de bague de retenue inférieure (7) sont identiques à la distance entre les deux saillies en forme de bande sur le premier support (3) en taille, et dans l'étape 4, lorsque le composant de bague de retenue supérieure et le composant de bague de retenue inférieure sont placés entre le premier support (3) et le second support (14) de haut en bas et de bas en haut respectivement, le composant de bague de retenue supérieure et le composant de bague de retenue inférieure sont guidés à travers les deux saillies en forme de bande.

7. Procédé de préparation d'un échantillon de faisceau de fibres de carbone selon la revendication 3, **caractérisé en ce que** dans l'étape 6, avant que la bague de retenue ne soit serrée par le dispositif de serrage dans l'ensemble de coupe de bords, les parties, s'étendant à l'extérieur de la bague de retenue, de deux extrémités de l'échantillon de faisceau de fibres de carbone sont d'abord coupées courtes à une longueur définie.

FIG. 1

FIG. 2

A-A

FIG. 3

B-B

FIG. 4

C-C

FIG. 5

D-D

FIG. 6

$\frac{\text{I}}{\text{放大}}$

15

16

FIG. 7

Enlarged

FIG. 8

FIG. 9

FIG. 10

FIG. 11

FIG. 12

FIG. 13

FIG. 14

FIG. 15

FIG. 16

FIG. 17

**EP 3 957 972 B1**

**Patent documents cited in the description**

- JP 2006175394 A